Europäisches Patentamt

European Patent Office

Office européen des brevets

⑩

(11) Numéro de publication: **0 270 585**
**B1**

(12) **FASCICULE DE BREVET EUROPEEN**

(45) Date de publication du fascicule du brevet: **16.08.90**

(21) Numéro de dépôt: **87903331.4**

(22) Date de dépôt: **20.05.87**

(86) Numéro de dépôt international:
**PCT/FR87/00165**

(87) Numéro de publication internationale:
**WO 87/07275 03.12.87 Gazette 87/27**

(51) Int. Cl.⁵: **C 07 H 19/01, C 08 B 37/00**

(54) **PROCEDE DE PREPARATION A HAUTE CONCENTRATION DANS LE FLUORURE D'HYDROGENE D'OLIGO- ET POLY-OSIDES RAMIFIES, NOTAMMENT A PARTIR DE SACCHAROSE.**

(30) Priorité: **21.05.86 FR 8607201**

(43) Date de publication de la demande:
**15.06.88 Bulletin 88/24**

(45) Mention de la délivrance du brevet:
**16.08.90 Bulletin 90/33**

(84) Etats contractants désignés:
**BE DE FR GB IT NL**

(56) Documents cités:
**DE-A- 521 340**
**DE-A- 585 318**
**DE-A- 587 975**
**FR-A- 809 208**

**Industrial and Engineering Chemistry, vol. 44, no. 5, mai 1952; L. Sattler et al.: "Preparation and properties of fructose and glucose anhydrides", pages 1127-1135.**

(73) Titulaire: **BEGHIN-SAY SOCIETE ANONYME F-59239 Thumeries (FR)**

(72) Inventeur: **BOUCHU, Alain**
**11, av. R. Rosselini**
**F-69100 Villeurbanne (FR)**
Inventeur: **CHEDIN, Jean**
**1ter, rue Mornay**
**F-75004 Paris (FR)**
Inventeur: **DEFAYE, Jacques**
**202, chemin du Vercors**
**F-38330 Saint Ismier (FR)**
Inventeur: **LAFONT, Didier**
**251, parc de Cassan**
**F-95290 L'Isle Adam (FR)**
Inventeur: **WONG, Emile**
**117, cours Jean Jaurès**
**F-38000 Grenoble (FR)**

(74) Mandataire: **David, Daniel et al**
**KAYSERBERG Service Propriété Industrielle 54, avenue Hoche**
**F-75008 Paris (FR)**

**Description**

L'invention se rapporte à un procédé de préparation d'hétérooligo- ou poly-osides ramifiés à partir du saccharose en particulier, et aux produits obtenus par ce procédé. Elle concerne notamment le domaine des produits alimentaires non métabolisables ou à métabolisation lente, ainsi que les domaines où les propriétés de rétention d'eau de ces composés peuvent être d'intérêt, notamment la cosmétologie.

Il est connu que l'action du fluorure d'hydrogène (HF) sur les cétoses et polycétosides, tels que le *D*-fructose ou l'inuline, conduit à la formation de dianhydrides dioxolanniques résultant de la dimérisation de deux molécules de cétose (*Carbohydr. Res. 136* (1985) 53—65). Ces dianhydrides sont en équilibre thermodynamique, en solution dans le fluorure d'hydrogène. Six isomères ont ainsi été isolés et caractérisés. Les auteurs ont montré que, dans le mélange réactionnel, leurs proportions relatives dépendent des conditions opératoires.

La demande de brevet PCT/FR8400186 décrit un procédé de fabrication de ces dianhydrides, avec l'objectif de préparer des agents édulcorants non métabolisables en utilisant plus particulièrement du *D*-fructose, du sorbose, de l'inuline ou du saccharose. Le procédé décrit dans ce brevet consiste à faire réagir le glucide, sans addition d'eau, avec le fluorure d'hydrogène utilisé comme solvant et réactif, puis à éliminer l'haloacide par voie sèche. L'efficacité du procédé est directement liée à la dissolution du glucide dans le fluorure d'hydrogène. Dans l'exemple donné pour le saccharose, la proportion de ce glucide par rapport au fluorure d'hydrogène est de 5 g pour 10 ml. Après un temps donné de réaction, le produit résultant est précipité par addition d'éther éthylique. Il est constitué d'un mélange de dianhydrides du D-fructose et de fluorures de glucosyle.

On sait d'autre part que la dissolution d'aldoses ou de polyaldoses tels que le *D*-glucose, l'amylose ou la cellulose, dans le fluorure d'hydrogène conduit au fluorure de glucosyle en équilibre avec des composés d'autocondensation (produits de réversion). Cet équilibre peut être déplacé en faveur des oligomères d'autocondensation par simple évaporation de HF, ce qui conduit à l'obtention d'un mélange d'oligosaccharides ramifiés liés principalement α— et β—(1→6), mais également α— et β—(1→2), (1→3) et (1→4) et de degré de polymérisation généralement inférieur à 5 (*Carbohydr. Res. 110,* (1982) 217—227).

La présente invention se propose de préparer, avec de bons rendements, par simple traitement par le fluorure d'hydrogène, comme solvant et réactif ensuite éliminé des hétero- oligo- et poly-osides ramifiés hydrosolubles, à partir de glucides tels que le saccharose, ou de tout autre glucide, comportant au moins un motif cétose et, le cas échéant un motif aldose, ceux-ci pouvant être additionnés d'un aldose ou d'un polyaldoside.

Le procédé est caractérisé en ce que le rapport en poids glucide/fluorure d'hydrogène mis en jeu est au moins égal à 2/1. En effet, contrairement à la réaction de l'art antérieur où la transformation du saccharose par exemple, effectuée en milieu à faible concentration en glucide, est rapide et violente et conduit aux dimères mentionés, il a été trouvé qu'il était possible d'obtenir les oligomères ramifiés souhaités avec un rapport glucide/HF élevé, ce qui permet par ailleurs un contrôle plus aisé de la réaction.

La grande proportion de glucide dans le milieu n'empêche pas le fluorure d'hydrogène de jouer à la fois un rôle de solvant, de destructurant des macromolécules, de réactif et de catalyseur de la réaction, ce qui n'était nullement prévisible. La quantité minimale de HF nécessaire à la réaction dépend en fait essentiellement des conditions de la dispersion macromoléculaire des glucides dans le milieu (agitation, broyage, etc.), de telle façon que cette réaction se déroule en milieu homogène.

Les avantages attendus de cette méthode sont importants au plan industriel. En effet, HF est un produit de manipulation délicate, il est assez coûteux, toxique, très agressif et nécessite un appareillage approprié. On a pu ainsi constater quel'on pouvait obtenir des produits d'autocondensation avec un bon rendement, tout en réduisant la quantité de HF nécessaire à la réaction. En conséquence, les problèmes liés à la récupération de l'acide, à son recyclage et aux pertes sont diminués.

Par ailleurs, par rapport aux techniques utilisant de faibles concentrations dans HF, le procédé à très haute concentration en glucide offre également un mélange réactionnel beaucoup moins corrosif vis-à-vis de l'appareillage utilisé. En effet, un grande partie du HF est fixée d'une manière plus ou moins labile dans la pâte qui se forme rapidement. Il se crée des liaisons hydrogène avant la manifestation même de l'effet réactif. La quantité de HF libre susceptible de corroder l'appareillage est de ce fait très réduite.

Il y a toutefois une limite supérieure de la concentration au-delà de laquelle la réaction cess de s'effectuer dans de bonnes conditions, où la pâte devient trop dure, même avec un broyage mécanique pendant la réaction, et où il subsiste en fin de réaction une quantité non négligeable de produit qui n'as pas réagi. Il a ainsi été trouvé que le rapport glucide/HF ne devrait pas excéder 7/1.

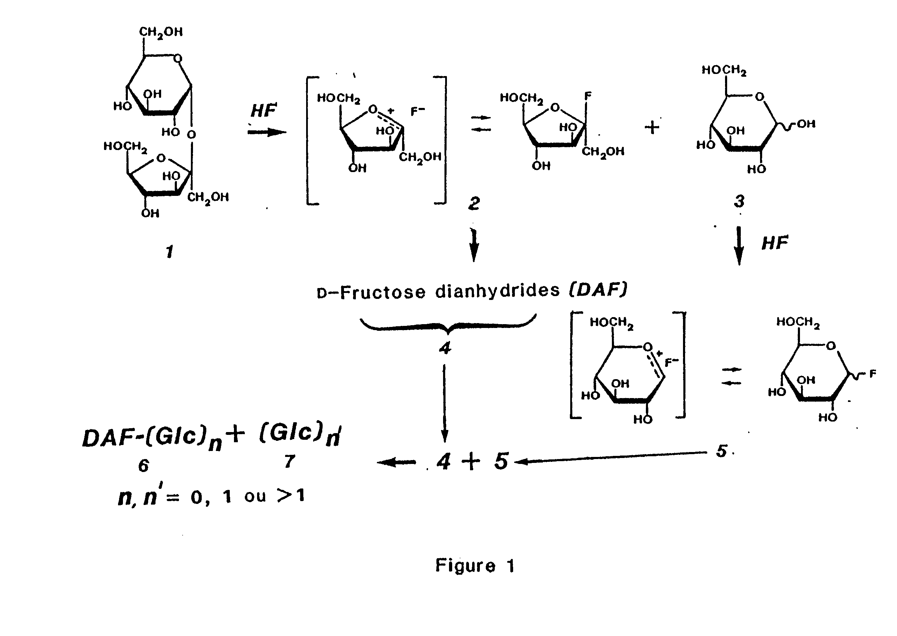

Les réactions mises en jeu peuvent, sur un plan fondamental, être schématisées de la façon suivante (schéma de la figure 1):

Il a été que l'action de HF sur le saccharose 1 conduit, dans un premier temps, à une rupture de la liaison interosidique entre les motifs glucopyranose et fructofuranose, suivie d'une dimérisation simultanée des entités correspondant au cétohexose libéré 2 et formation d'un mélange de dianhydrides du *D*-fructose (DAF) 4. Le *D*-glucose 3 formé lors de cette réaction peut, suivant les conditions opératoires, réagir avec le fluorure d'hydrogène, en donnant lieu à formation d'un fluorure de _D_-glucopyranosyle vraisemblablement en équilibre avec le cation glucosyle correspondant 5. Cette entité réactive peut s'auto-condenser en seconde étape avec formation de produits de réversion 7. Elle est également susceptible de réagir avec les dianhydrides du fructose présents dans le milieu réactionnel en conduisant à des structures ramifiées hétéro-oligo- et poly- saccharidiques 6 comme indiqué dans la schéma da la figure 1. Le taux de transformation en ces différents composé dépend des conditions opératoires: concentration en fluorure d'hydrogène, température, temps de réaction et moyens mécaniques d'agitation ou de broyage mis en oeuvre.

Selon un autre aspect de l'invention qui résulte de l'examen du schéma réactionnel précédent, on augmente le degré de polymérisation et de ramification des produits résultants en permettant aux entités glucose d'être en plus forte concentration dans la solution par rapport aux entités cétose. Le procédé décrit ci-dessus est par conséquent applicable également aux mélanges de saccharose, ou de tout autre glucide comportant au moins un motif cétose, avec un aldose ou un polyaldoside. Ces derniers composés sont susceptibles, selon le schéma réactionnel précédemment explicité, de réagir avec les dianhydrides de cétoses pour donner les produits ramifiés de masse moléculaire plus élevée 6.

La réaction n'est le plus souvent pas effectuée en milieu anhydre. Le milieu réactionnel comprend le fluorure d'hydrogène pur, accompagné éventuellement d'une certaine quantité d'eau. Cette dernière peut provenir du HF utilisé, qui n'est pas nécessairement anhydre, de la réaction elle-même qui peut produire de l'eau et, le cas échéant, du degré d'hydratation du glucide mis en oeuvre, lequel peut éventuellement être réduit par sécharge préalable. Il est bien entendu que le terme fluorure d'hydrogène englobe les cas où, dans le milieu réactionnel, il est associé à une certaine quantité d'eau. Toutefois, celle-ci ne devra pas dépasser 40% de la quantité de fluorure d'hydrogène utilisé, auquel cas les réactions seraient ralenties.

La réaction s'applique de préférence au saccharose, mais d'autres glucides comportant au moins un motif cétose, sont également envisageables: tels le fructose, le sorbose, les kestoses, neokestose, erlose, gentianose, raffinose, melezitose, inuline, levane, Dans le cas où le glucide ne comporte qu'un ou des motifs cérose, il sera bien évidemment additionné d'un aldose ou d'un polyaldoside. Il en est de même si le glucide est constitué essentiellement de motifs cétose, comme l'inuline.

Par aldose, on comprend aussi bien les aldopentoses et les aldohexoses dont le glucose est un exemple. Les polyaldosides sont des oligo- et poly-osides constitués essentiellement de motifs du type aldose. On trouve dans ce groupe l'amidon et ses composants amylose et amylopectine ainsi que la cellulose, qui contiennent le motif anydro-glucose comme constituant principal, ou encore le xylane, constituant des hémicelluloses, qui contient le motif anhydro-xylose.

Lorsque le saccharose seul, ou tout autre glucide comportant au moins un motif cétose et un ou plusieurs motifs aldose, est utilisé, sa concentration dans le fluorure d'hydrogène est de préférence choiside de façon à ce que le rapport en poids glucide/HF soit compris entre 2/1 et 7/1. En travaillant à température ambiante et lorsque le rapport glucide/HF est égal ou inféreiur à 3/1, le taux résiduel d'aldose formé dans la réaction est généralement inférieur à 5% en poids par rapport au total des produits formés. Au-delà de cette concentration, la proportion d'aldose résiduel augmente jusqu'à atteindre 25% du mélange total obtenu pour un rapport respectif ose, polyoside/HF égal à 7/1. Ce taux d'aldose résiduel peut être sensiblement diminué en travaillant à température plus élevée et (ou) avec des conditions d'agitation et de malaxage appropriées. Ainsi on utilisera de préférence des températures inférieures ou égales à 50°C et des temps de réaction allant de quelques minutes à 3 heures.

Pour des rapports en poids glucide/HF inférieurs ou égaux à 3/1, on procédera de la façon suivante: à température ambiante, le saccharose ou tout autre glucide comportant au moins un motif cétose, et un ou plusieurs motifs aldose, est additioné de fluorure d'hydrogène, et la solution résultante est maintenue sous agitation pendant 15 min à 1 h. Le fluorure d'hydrogène est ensuite évaporé sous pression réduite à des températures comprises entre 20 et 80°C, et de préférence entre 30 et 50°C. Le produit brut, obtenu sous forme de sirop, mais plus généralement de poudre sèche, à une teneur résiduelle en HF qui dépend beaucoup des conditions d'agitation et (ou) de malaxage utilisées lors de l'évaporation. De façon à obtenir une teneur acceptable pour l'usage alimentaire, il est dissous dans l'eau et neutralisé par addition de carbonate de calcium. Au cas où des ions fluorures se trouveraient encore présents dans les produits de la réaction, une déminéralisation par passage sur une colonne de résine échangeuse mixte cation-anion permet de les éliminer.

Pour des rapports en poids glucides/HF supérieurs à 3/1, le protocole opératoire précédent est respecté, mais la température de la réaction est portée au-delà de 20°C jusqu'à 80°C, et de préférence de 30° à 50°C, avec un temps de réaction compris entre 1 et 3 h.

Lorsqu'un aldose tel le _D_-glucose, ou un polyaldoside tels l'amidon, la cellulose ou un xylane, sont mis en réaction avec le fluorure d'hydrogène, conjointement avec un glucide comportant au moins un motif cétose, le rapport en poids glucide/HF doit être de préférence inférieur ou égal à 5/1. Dans ce cas, la teneur résiduelle en _D_-glucose reste inférieure ou égale à 10%. Le mode opératoire utilisé est identique à celui décrit précédemment, en tenant compte qu'il est préférable d'ajouter l'aldose ou le polyaldoside à la solution de saccharose ou du glucide comportant au moins un motif cétose, dans le fluorure d'hydrogène.

Les produits obtenus selon ce procédé sont nouveaux et constituent également un objet de l'invention.

Lorsque le saccharose est utilisé seul, en réaction avec le fluorure d'hydrogène, l'analyse montre que le mélange de produits obtenus est constitué des dianhydrides décrits antérieurement, et principalement de dianhydrides du D-fructose greffés par 1 à 10 unités de D-glucose. L'analyse a montré que la forme prépondérante des dianhydrides est celle du dihétérolévulosan II (α-D-fructofuranose β-D-fructopyranose). La teneur résiduelle en D-glucose est, comme mentionné ci-dessus, fonction des conditions opératoires (rapport glucide/HF, température, temps de réaction, conditions d'agitation). Lorsqu'un aldose ou un polyaldoside, glucose, amidon ou cellulose par exemple, sont ajoutés on peut détecter la formation simultanée de produits de réversion correspondants (polyglucosanes ramifiés) et on observe une augmentation simultanée de la masse moléculaire des dianhydrides de cétoses obtenus, résultant du greffage sur le noyau dianhydride de cétoses, de l'aldose ou d'oligosaccharides d'aldose.

Les produits obtenus ont été caractérisés par utilisation de techniques connues, rappelées ci-dessous à titre d'exemple:

Le pouvoir réducteur est estimé par la méthode utilisant l'acide 2,5-dinitrosalicylique (méthode au DNS) et donné (%) par rapport au D-glucose.

Le D-glucose résiduel est évalué selon la méthode enzymatique utilisant la D-glucose-oxydase commercialisée par la Sté Boehringer.

L'estimation des composants non dialysables est réalisée en plaçant l'échantillon, en solution dans l'eau, dans un tube de dialyse Visking®, à paroi mince, commercialisé par Union-Carbide et susceptible de retenir les molécules de masse supérieure à 6.000. Un courant d'eau circule pendant 48 h au contact de ce tube de dialyse.

La présence d'oligosaccharides de DP supérieur à 5, est évauée en chromatographie liquide sous haute pression (CLHP) par utilisation d'une colonne "Sugar Pak"® commercialisée par la Société Waters, dans laquelle la phase stationnaire est constituée par un gel échangeur d'ions sous forme de sel de calcium. La technique de chromatographie utilisant l'exclusion de gel permet également, par rétention sélective des molécules en fonction de leur volume hydrodynamique, de visualiser la polydispersité en masse des mélanges polysaccharidiques et d'apprécier les masses moléculaires en équivalents dextrines des mélanges.

La r.m.n. du $^{13}$C permet de visualiser la présence de dianhydrides du D-fructose en tenant compte des paramètres décrits dans la publication *Carbohydr. Res. 136* (1985) 53—65.

Le greffage d'unités glucose sur les dianhydrides de cétoses est apprécié par utilisation de la spéctrométrie de masse en mode d'ionisation par bombardement d'atomes accélérés et détection d'ions positifs ou négatifs. A titre d'exemple, les produits résultant de l'action de HF sur le saccharose donnent lieu, en détection d'ions positifs, principalement aux dianhydrides du D-fructose, débutant à la masse 324 et se poursuivant par les masses 486, 648, 810, résultant de greffage de n-unités anhydroglucose.

Dans le cas où l'on ajoute un aldose ou un polyaldoside tel que l'amidon (exemple 4), il apparaît une série d'ions supplémentaires débutant à la masse 180, ayant pour écart de masse 162, ce qui correspond à la série des oligosaccharides du D-glucose.

Les exemples qui suivent illustrent l'invention. Il est à noter que, de façon générale dans ces essais, une première phase de réaction est réalisée dans un vase en polytétrafluoroéthylène, avec agitation mécanique. Le mélange obtenu est ensuite transféré dans un réacteur en acier inoxydable. Le fluorure d'hydrogène, ainsi que l'eau éventuellement formée dans la réaction, sont alors évaporés sous pression réduite ou par balayage avec de l'air sec, un gaz inerte et à une température convenable. Il est entendu que, industriellement, ces deux phases du procédé pourraient être effectuées dans le même appareil, doté de moyens mécaniques d'agitation et (ou) de broyage suffisant, ce qui n'est pas le cas du réacteur expérimental présentement utilisé.

Les rendements indiqués dans les exemples constituent des rendements minimaux, étant donné qu'une partie des produits résultant de la première phase de travail est susceptible de rester fixée sur les parois du vase.

Exemple 1:
Saccharose/HF, dans un rapport 3:1

Le saccharose (60 g), placé dans un réacteur en polytetrafluoroéthylène, est additioné à température ambiante et avec agitation mécanique, de fluorure d'hydrogène (20 g). Après 1 h à cette température, la solution est transférée dans un réacteur en acier inoxydable. L'évaporation du fluorure d'hydrogène est réalisée en 30 à 45 min sous une dépression de 15 Pa. Elle permet d'obtenir un produit solide pouvant être aisément réduit en poudre.

Ce mélange est dissous dans l'eau et neutralisé par addition de carbonate de calcium, puis filtré. Le filtrat est déminéralisé par passage sur une colonne de résine échangeuse d'ions mixte. Au cas où une légère coloration serait perceptible, cette étape peut être eventuellement suivie d'un passage sur une colonne de charbon végétal. Le produit est obtenu, avec un rendement de 80%, sous la forme d'une poudre blanche après lyophilisation (64 g, 80%).

Caractéristiques:
  Pouvoir réducteur (par référence au
    $\underline{D}$-glucose): 12 à 16%.
  Teneur résiduelle en $\underline{D}$-glucose, 2,5%.
  Teneur résiduelle en $\underline{D}$-fructose:
    négligeable.
  Fraction non dialysable:
    inférieure à 10%.
  Solubilité dans l'eau à 20°C: 75%.
  $[\alpha]_{\underline{D}}^{25}+18$ (c 1, H$_2$O).

Exemple 2:
Saccharose/HF, dans un rapport 5:1
  Le protocole expérimental décrit pour l'exemple 1 est utilisé en partant de saccharose (25 g) et de HF (5 g). La différence porte sur la température et le temps de réaction qui sont respectivement de 50°C et de 2 h. Le produit est également obtenu sous la forme d'une poudre blanche après lyophilisation (23 g, 92%).

Caractéristiques:
  Pouvoir réducteur: 10 à 12%
  Teneur résiduelle en $\underline{D}$-glucose: 4%.
  Teneur résiduelle en $\underline{D}$-fructose:
    négligeable.
  Solubilité dans l'eau à 20°C: 75%.
  $[\alpha]_{\underline{D}}^{25}+17$ (c 1, H$_2$O).

Exemple 3:
Saccharose/HF, dans un rapport 7:1
  Les conditions opératoires sont identiques à celles de l'exemple 2. On utilise du saccharose (35 g) et du fluorure d'hydrogène (5 g). Le produit résultant est obtenu sous la forme d'une poudre blanche après lyophilisation (33 g, 94%).

Caractéristiques:
  Pouvoir réducteur: 12 à 16%.
  Teneur résiduelle en $\underline{D}$Fraction non dialysable:
    inférieure à 10%.
  Solubilité dans l'eau à 20°C: 75%.
  $[\alpha]_{\underline{D}}^{25}+17$ (c 1, H$_2$O).

Exemple 4:
Saccharose/amidon/HF dans un rapport 5:1:2 (rapport glucide/HF, 3:1)
  Le saccharose (25 g), placé dans un réacteur en polytétrafluoro-éthylène, est additionné à température ambiante et avec agitation mécanique, de fluorure d'hydrogène (10 g). Après 15 min d'agitation, 5 g d'amidon (10% d'humidité) sont additionnés au mélange. La réaction est agitée pendant 30 min supplémentaires, puis évaporée en 30 min à 50°C sous pression réduite. Le produit, obtenu sous forme pulvérulente, est repris par l'eau, neutralisé et filtré. Le filtrat est ensuite concentré puis traité par le charbon actif, avant évaporation à sec ou lyophilisation qui conduit à une poudre blanche (25 g, 83%).

Caractéristiques:
  Pouvoir réducteur: 12%.
  Teneur résiduelle en glucose: 4%.
  Fraction non dialysable:
    inférieure à 10%.
  Solubilité dans l'eau à 20°C: 75%.
  $[\alpha]_{\underline{D}}^{25}+23$ (c 1, H$_2$O).

Exemple 5:
Saccharose/amidon/HF dans un rapport 3:3:2 (rapport/glucide/HF, 3:1)
  Le protocole expérimental utilisé est identique à celui de l'exemple 4. Seuls les rapports respectifs saccharose-amidon sont modifiés. Dans cet exemple, on utilise 15 g de saccharose, 15 g d'amidon (10% d'humidité) et 10 g de fluorure d'hydrogène. Le produit est obtenu sous la forme d'une poudre blanche après lyophilisation (22 g, 77%).

Caractéristiques:
  Pouvoir réducteur: 12 à 16%.
  Teneur résiduelle en glucose: 3 à 4%.
  Fraction non dialysable:
    inférieure à 10%.
  Solubilité dans l'eau à 20°C: 75%.
  $[\alpha]_{\underline{D}}^{25}+27$ (c 1, H$_2$O).

Exemple 6:
Saccharose/amidon/HF dans un rapport 4:1:1 (rapport glucide/HF, 5:1)
  Le saccharose (40 g), placé dans un réacteur en polyéthylène est additionné à température ambiante et avec agitation mécanique de fluorure d'hydrogène (10 g). Après 15 min d'agitation, 10 g d'amidon (10% d'humidité) sont additionnés au mélange. La réaction est laissée 1 h 30 à 50°C sous agitation. Le mélange visqueux est repris par l'eau puis neutralisé et filtré. Le filtrat est ensuite concentré puis traité par le charbon actif avant évaporation à sec ou lyophilisation (41.5 g, 85%).

Caractéristiques:
  Pouvoir réducteur: 7 à 8%.
  Teneur résiduelle en glucose: 7%.
  Teneur résiduelle en fructose:
    négligeable.
  Fraction non dialysable: 25%.
  Solubilité dans l'eau à 20°C: 70%.
  $[\alpha]_{\underline{D}}^{25}+40$ (c 1, H$_2$O).

**Revendications**

1. Procédé de préparation d'oligo- ou polyosides ramifiés à partir d'au moins un glucide,
  soit constitué d'un ou de motifs cétose, ledit glucide étant additionné d'un aldose ou d'un polyaldoside,
  soit comportant au moins un motif cétose et un motif aldose, ledit glucide étant éventuellement additionné d'un aldose ou d'un polyaldoside,
  caractérisé en ce que ledit glucide est mis en réaction avec le fluorure d'hydrogène utilisé comme solvant et réactif, dans un rapport en poids glucide/fluorure d'hydrogène au moins égal à 2:1, et ensuite éliminé.

2. Procédé, selon la revendication 1, caractérisé en ce que ledit rapport glucide/fluorure d'hydrogène est compris entre 2:1 et 7:1.

3. Procédé selon l'une des revendications précédentes, caractérisé en ce que le glucide est le saccharose.

4. Procédé, selon la revendication 2, caractérisé en ce que le glucide est le fructose, le sorbose, les kestoses, neokestose, erlose, gentianose, raffinose, melezitose, inuline ou levane.

5. Procédé, selon l'une des revendications précédentes, caractérisé en ce que le glucide, comportant au moins un motif cétose et un alodse, est mis en réaction seul avec HF.

6. Procédé, selon l'une des revendications 1 à 5, caractérisé en ce que l'aldose ou le polyaldoside ajouté le cas échéant au glucide est le glucose, le xylose, l'amidon, la cellulose, un xylane ou une hémicellulose.

7. Procédé selon la revendication 6, caractérisé en ce que ledit rapport est compris entre 2:1 et 7:1, et de préférence compris entre 2:1 et 5:1.

8. Hétéro- oligo- et poly-osides ramifiés susceptibles d'être préparés selon l'une des revendications 1 à 7.

## Patentansprüche

1. Verfahren zur Herstellung von verzweigten Oligo- oder Polyosiden, ausgehend von mindestens einem Zucker, der

entweder aus einem oder mehreren Ketosemotiven gebildet wird, wobei dem Zucker eine Aldose oder ein Polyaldosid zugesetzt wird,

oder mindestens ein Ketosemotiv und ein Aldosemotiv enthält, und dem Zucker eventuell eine Aldose oder ein Polyaldosid zugesetzt wird,

dadurch gekennzeichnet, daß der Zucker mit dem als Lösungs- und Reaktionsmittel eingesetzten Fluorwasserstoff in einem Gewichtsverhältnis Zucker/Fluorwasserstoff mindestens gleich 2:1 zur Reaktion gebracht wird, und der Fluorwasserstoff anschließend entfernt wird.

2. Verfahren nach Anspruch 1, dadurch gekennzeichnet, daß sich das Verhältnis Zucker/Fluorwasserstoff in einem Bereich zwischen 2:1 und 7:1 bewegt.

3. Verfahren nach einem der vorgehenden Ansprüche, dadurch gekennzeichnet, daß der Zucker Saccharose ist.

4. Verfahren nach Anspruch 2, dadurch gekennzeichnet, daß der Zucker Fructose, Sorbose, Kestosen, Neokestose, Erlose, Gentianose, Raffinose, Melezitose, Inulin oder Levulose ist.

5. Verfahren nach einem der vorhergehenden Ansprüche, dadurch gekennzeichnet, daß der Zucker mit mindestens einem Ketose- und einem Aldosemotiv alleine zur Reaktion mit HF eingesetzt wird.

6. Verfahren nach einem der Ansprüche 1 bis 5, dadurch gekennzeichnet, daß die gegebenenfalls dem Zucker zugesetzte Aldose oder das Polyaldosid Glucose, Xylose, Stärke, Zellulose, ein Xylan oder eine Hemizellulose ist.

7. Verfahren nach Anspruch 6, dadurch gekennzeichnet, daß das Verhältnis in einem Bereich zwischen 2:1 und 7:1, vorzugsweise zwischen 2:1 und 5:1 liegt.

8. Verzweigte Hetero- Oligo- und Polyoside, hergestellt nach einem der Ansprüche 1 bis 7.

## Claims

1. Process for the preparation of branched oligo- and polyosides from at least one carbohydrate,

either made up from one ketose unit or ketose units, an aldose or a polyaldoside being added to the said carbohydrate,

or including at least one ketose unit and one aldose unit, an aldose or a polyaldoside possibly being added to the said carbohydrate,

characterized in that the said carbohydrate is reacted with the hydrogen fluoride used as solvent and reactant at a weight ratio carbohydrate/hydrogen fluoride of at least 2:1, and subsequently eliminated.

2. Process according to Claim 1, characterized in that the said carbohydrate/hydrogen fluoride ratio is between 2:1 and 7:1.

3. Process according to one of the previous claims, characterized in that the carbohydrate is sucrose.

4. Process according to Claim 2, characterized in that the carbohydrate is fructose, sorbose, the kestoses, neokestose, erlose, gentianose, raffinose, melezitose, inulin or levan.

5. Process according to one of the previous claims, characterized in that the carbohydrate, including at least one ketose unit and an aldose, is reacted alone with HF.

6. Process according to one of Claims 1 to 5, characterized in that the aldose or polyaldoside added to the carbohydrate if the case arises is glucose, xylose, starch, cellulose, a xylan or a hemicellulose.

7. Process according to Claim 6, characterized in that the said ratio is between 2:1 and 7:1, and preferably between 2:1 and 5:1.

8. Branched hetero- oligo- and poly-osides which can be prepared according to one of Claims 1 to 7.

D-Fructose dianhydrides *(DAF)*

$DAF\text{-}(Glc)_n + (Glc)_{n'}$

$n, n' = 0, 1$ ou $>1$

Figure 1

EP 0 270 585 B1